# EUROPEAN PATENT APPLICATION

(11) **EP 1 998 519 A2**
(43) Date of publication of application: **03.12.2008**
(21) Application number: 08002017.5
(22) Date of filing: 04.02.2008
(51) Int. Cl.: H04L 12/58

(54) **Apparatus and method for providing information for multimedia messaging service in portable terminal**

(30) Priority: 29.05.2007 KR 20070051883
(71) Applicant: Samsung Electronics Co., Ltd., Suwon-si, Gyeonggi-Do (KR)
(72) Inventor: Choi, Pil Sik, Yeongtong-gu Suwon-si Gyeonggi-do (KR)
(74) Representative: Boakes, Jason Carrington

(57) **Abstract**

An apparatus and method for providing information for multimedia messaging service (MMS) in a portable terminal. The method includes: receiving an MMS message having free of charge reply information; and displaying the free of charge reply information on the display unit. Periodically, the portable terminal reminds a user of the free of charge reply information, so that the user does lose advantages from failing to read the charge reply information.

## Description

### BACKGROUND OF THE INVENTION

### 1. Field of the Invention

The present invention relates to a portable terminal. More particularly, the present invention relates to an apparatus and method that provide free of charge reply information for multimedia messaging service (MMS) in a portable terminal.

### 2. Description of the Related Art

Open Mobile Alliance (OMA) is a working group that develops open standards for mobile applications to provide multimedia messaging services (MMS). The present invention addresses an improvement to the standards for MMS that OMA has developed.

Recently, with the growth of messaging services that use mobile communication terminals, interest in MMS-related technology has increased, with a specific interest in technology that transmits not only text messages, but also text messages with moving images, combined images, and music.

MMS refers to a service that transmits a relatively large amount of multimedia data, such as a moving image and music. By comparison, a conventional short messaging service (SMS) transmits a relatively small amount of data, in which a simple text message is transmitted. The MMS, which was proposed by a Universal Mobile Telecommunication System (UMTS) forum, was originally developed to complement SMS, because SMS has been widely provided through the Global System for Mobile Communications (GSM) network. However, the UTMS forum proposed that MMS should be provided as a service independent of SMS.

MMS has an option that a sender, who transmitted a multimedia message (MM) to a receiver, can pay a fee to receive a reply MM transmitted from the receiver. This option is called a free of charge reply.

For example, some companies sell MMS service that allows users of MMS-capable portable terminals to send multimedia messages to a recipient who has an MMS capable portable terminal, or alternatively, to an email address of the recipient. Each received message may offer the receiver a credit that can be used to reply to sender of the MMS message that was received. However, for example, Vodaphone has a policy in which a non-customer recipient's of an MMS message have three days available to answer the received MMS message with a reply of up to 1,00 characters and image, sound or video files. However, a recipient who is also a customer of the MMS service receives a credit that is good for up to 30 days to reply to either the original sender, or to send an MMS to other receivers. In fact, in the particular case of one communication company, the MMS senders are told "do not forget to tell your friends that they have available three days, up to 1,000 characters and image, sound or video files to answer your message."

However, with the conventional MMS, users often forget about this free of charge reply after setting up their terminal. As a result, a method is needed to notify users of the information about the free of charge reply so that this credit is not wasted because the time to respond free of charge has expired.

### SUMMARY OF THE INVENTION

The present invention is made in part to solve at least some of the above-mentioned problems, and to provide at least the advantages as described herein below. Therefore, the present invention comprises an apparatus and method for providing information for multimedia messaging service (MMS) in a portable terminal so that users do not lose advantages resulting from the failure to read information about a free of charge reply or to be reminded about the free charge of reply..

In accordance with an exemplary embodiment of the present invention, a method for providing information for a multimedia messaging service (MMS) in a portable terminal, includes:
receiving an MMS message including free of charge reply information; and displaying the free of charge reply information.

In accordance with another exemplary embodiment of the present invention, an apparatus for providing information for a multimedia messaging service (MMS) in a portable terminal, including: a display unit for displaying free of charge reply information included in a received MMS message; a storage unit for storing the free of charge reply information and remind time corresponding to the free of charge reply information; and a controller for controlling the display unit to display the free of charge reply information.

### BRIEF DESCRIPTION OF THE DRAWINGS

The objects, features, and advantages of the present invention will be more apparent from the following detailed description in conjunction with the accompanying drawings, in which:
FIG. 1 is a schematic block diagram illustrating an MMS system according to an exemplary embodiment of the present invention;
FIG. 2 is an illustration of signal flow for transmitting an MMS message among the 1^{st} user agent, MMS relay/server, and the 2^{nd} user agent, according to an exemplary embodiment of the present invention, in which the MMS message includes free of charge reply information and an original MM;
FIG. 3 is an illustration of signal flow for transmitting a reply MM in response to the original MM of FIG. 2;
FIG. 4 is a schematic block diagram illustrating a user agent according to an exemplary embodiment of the present invention;
FIG. 5 is a flow chart describing a method for providing free of charge reply information in a user agent according to an exemplary embodiment of the present invention; and
FIG. 6A and FIG. 6B are screens describing a method for providing free of charge reply information in a user agent according to an exemplary embodiment of the present invention.

### DETAILED DESCRIPTION

Hereinafter, exemplary embodiments of the present invention are described in detail with reference to the accompanying drawings. The same reference numbers are used throughout the drawings to refer to the same or like parts. Detailed descriptions of well-known functions and structures incorporated herein may be omitted to avoid obscuring the appreciation of the subject matter of the present invention by a person of ordinary skill in the art.

Although the exemplary embodiments according to the present invention disclose a portable terminal based on a mobile communication terminal, it will be appreciated b a person of ordinary skill in the art that examples applied to use in the portable terminal can also be applied to many types of information communication devices, including but in no way limited to multimedia devices, and their applications, such as a digital broadcasting terminals, personal digital assistants (PDAs), smart phones, international mobile telecommunication 2000 (IMT-2000) terminals, wideband code division multiple access (WCDMA) terminals, and universal mobile telecommunication service (UMTS) terminals, etc. just to name a few possible applications of the present invention.

In the following description, the terms, MM, MMS, original-MM, Reply-MM, etc., will comply with the OMA standards. Also, the field name, such as X-Mms-Reply-Charging field, etc., and the message name, such as M-Send.req, etc., will comply with the OMA standards.

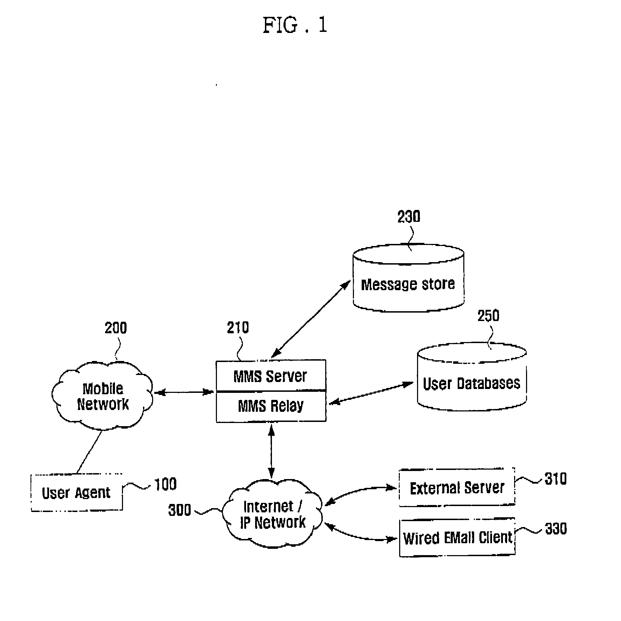

FIG. 1 is a schematic block diagram illustrating an MMS system according to an exemplary embodiment of the present invention.

As shown in FIG. 1, the MMS system includes a user agent (UA) 100, an MMS relay/server 210, a message store 230, and a user database 250. The MMS system may further include an external server 310 and a wired email client 330.

The user agent 100 is connected to the MMS relay/server 210 via a mobile network 200.

The mobile network 200 includes the 2^{nd} generation mobile network such as a GSM network, the 3rd generation mobile network such as a UMTS network, or a wireless LAN, etc,

The MMS relay/server 210 performs a series of functions to provide MMS. The MMS relay/server 210 serves to store MM in the message store 230 and to transmit/receive the MM. The MMS relay/server 210 may be divided into an MMS relay and an MMS server, so that they can be configured in the system, respectively, depending on a business model.

The message store 230 serves to store the MM.

The user database 250 stores information about users and/or user agents. The user database 250 may be configured in plural. For example, the user database 250 may include a user profile database and a home location register (HLR), etc., whose configuration are different.

The MMS relay/server 210 is connected to the external server 310 and the wired email client 330 through an Internet/IP network 300.

Although, in the following, the exemplary embodiment of the present invention will be described based on one MMS system, the MMS system may be configured to comply with many different types of user agent 100. That is, if the client and server employ different manufacturers' user agents, the MMS system can be configured to follow the user agents, respectively.

When the user agent client transmits an MM to the MMS relay/server 210 through the mobile network 200, the MMS relay/server 210 receives the MM and stores it. After that, the MMS relay/server 210 transmits the MM to the user agent server,

In particular, the exemplary embodiment of the present invention assumes that an MMS message (M-Send,req) is transmitted, along with information that the user agent client will must pay a fee for a reply MM (Reply-MM) responding to the original MM (Original-MM) originally transmitted by the user agent client. In this case, the MMS relay/server 210 includes free of charge reply information with the MMS message (M-Notification.ind and/or M-Retrieve.conf) to transmit it to the user agent server. The user agent server notifies a user of the received MMS message.

The free of charge reply information may be included in the header of a specific MMS message and then transmitted. The specific MMS message includes M-Send.req, M-Notification.ind, and M-Retrieve.conf. The following table describes free of charge reply information included in the header of an MMS message.

**[Table 1]**

| Field Name | Field Value |
|---|---|
| X-Mms-Reply-Charging | Reply-charging-value |
| X-Mms-Reply-Charging-Deadline | Reply-charging-Deadline-value |
| X-Mms-Reply-Charging-Size | Reply-charging-size-value |
| X-Mms-Reply-Charging-ID | Reply-charging-ID-value |

Referring to Table 1, the free of charge reply information of the MMS message includes a free of charge reply setting field (X-Mms-Reply-Charging), a free of charge reply deadline field (X-Mms-Reply-Charging-Deadline), a free of charge reply size field (X-Mms-Reply-Charging-Size), and a free of charge identifier field (X-Mms-Reply-Charging-ID).

The free of charge reply setting field indicates that a reply MM responding to a corresponding MM is free of charge. The free of charge reply deadline field is indicative of a deadline of the free of charge reply (service). The free of charge reply size field indicates the size of the free of charge reply message. The free of charge reply identifier field serves to identify a message including free of charge reply information, for example, an identifier of an MM (Original-MM) transmitted by a sender.

The MMS message may further include a sender field (From) and a subject field (Subject) indicating a subject of an MM.

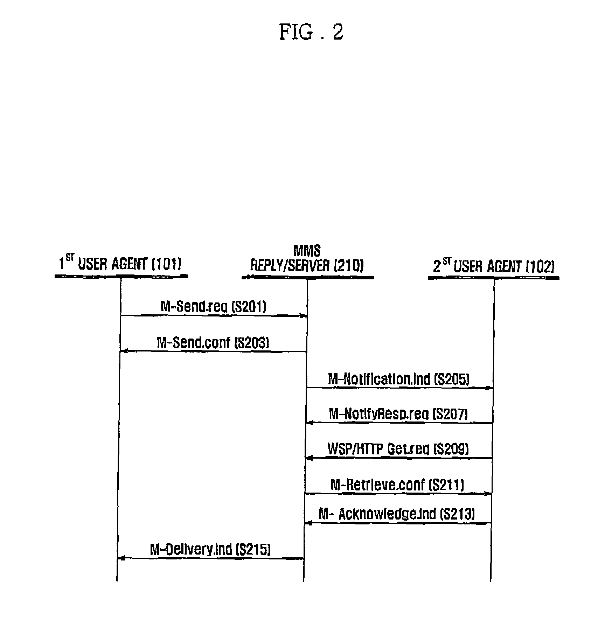

The following is a description of a method for transmitting an MMS message including free of charge reply information referring to FIG. 2.

FIG. 2 is an illustration of signal flow for transmitting an MMS message among the 1^{st} user agent, MMS relay/server, and the 2^{nd} user agent, according to an exemplary embodiment of the present invention, in which the MMS message includes free of charge reply information and an original MM. Here, it is assumed that the 1^{st} user agent 101 is a user agent client and the 2^{nd} user agent 102 is a user agent server. In addition, the 1^{st} user agent 101 includes all user agents that can transmit an MM and the 2^{nd} user agent 102 is a user agent according to an exemplary embodiment of the present invention.

Referring to FIG. 2, the 1^{st} user agent 101 transmits a send request message (M-Send.req), including the original MM (Original-MM) and free of charge reply information, to the MMS relay/server 210 (S201). The free of charge reply information is included in the header of the send request message. As described in Table 1, the free of charge reply information may include a free of charge reply setting field, a free of charge reply deadline field, a free of charge reply size field, and a free of charge Identifier field.

Referring to FIG. 2, after receiving the send request message (M-Send.req), the **MMS** relay/server 210 transmits a send confirmation message (M-Send.conf) to the 1^{st} user agent 101 (S203).

In addition, the MMS relay/server 210 transmits a notification message (M_Notification.ind) to the 2^{nd} user agent 102 (S205). The notification message includes the free of charge reply information with the header thereof. The free of charge reply information is the same as described in Table 1.

After receiving the notification message (M_Notification.ind), the 2^{nd} user agent 102 notifies a user (not shown) that the notification message includes free of charge reply information. The 2^{nd} user agent 102 may be implemented to notify the user of the free of charge reply information at intervals over a certain period.

Specifically, the 2^{nd} user agent 102 reminds a user about the free of charge reply information at one or more intervals over a certain period, which means that the user will not be charged a fee for the reply MM (Reply-MM) of a certain size, which responds to a corresponding MM (Original-MM), for a certain period of time. Thus, the user does not lose advantages due to failing to read the information about a free of charge reply. That is, the present invention helps prevent the user from forgetting which MM has a free of charge reply. Also, the present invention can prevent the user from missing the deadline of the free of charge reply and/or prevent the free of charge reply from exceeding the capacity.

Next, at (S207), the 2^{nd} user agent 102 transmits a notification confirmation message (M-NotifyResp.ind) responding to the notification message to the MMS relay/server 210.

Next, at (S209), the 2^{nd} user agent 102 transmits a receive request message (WSP/HTTP GET.req) to the MMS relay/server 210 to request that the original MM be received

At step (S211), the 2^{nd} user agent 102 receives the original MM from the MMS relay/server 210 through a retrieve message (M-Retrieve.conf) . Here, the 2^{nd} user agent 102 may receive the original MM through the retrieve message without an additional receive request process. The retrieve message may include free of charge reply information as described in Table 1.

The 2^{nd} user agent 102 selectively transmits the receive confirmation message (M-Acknowledge.ind) to the MMS relay/server 210 to notify that the receive has been completed (S213). In that case, the MMS relay/server 210 selectively transmits a delivery completion message (M-Delivery.ind) to the 1^{st} user agent 102 to notify that the original MM is successfully delivered to the 2^{nd} user agent 102.

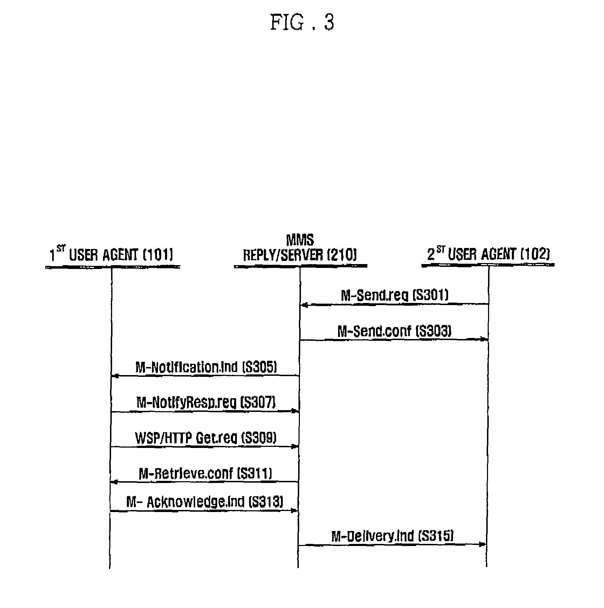

If the 2^{nd} user agent 102 has checked the free of charge reply information, it transmits a reply MM (Reply-MM) responding to the original MM (Original-MM) to the 1^{st} user agent 101. The method for transmitting a reply MM is similar to that of the original MM (Original-MM), which will now be briefly described referring to FIG. 3.

FIG. 3 is an illustration of signal flow for transmitting a reply MM in response to the original MM of FIG. 2.

As shown in FIG. 3, the 2^{nd} user agent 102 transmits a send request message (M-Send.req) including the reply MM to the MMS relay/server 210 (S301). After receiving the send request message (M-Send.req), the MMS relay/server 210 transmits a send confirmation message (M-Send.conf) to the 2^{nd} user agent 102 (S303).

Next, the MMS relay/server 210 transmits a notification message (M_Notification.ind) to the 1^{st} user agent 101 (S305). The 1^{st} user agent 101 transmits a notification confirmation message (M-NotifyResp.ind) to the MMS relay/server 210 at (S307).

At step (S309), the 1^{st} user agent 101 transmits a receive request message (WSP/HTTP GET.req) to the MMS relay/server 210 to request that the reply MM be received. In that case, the 1^{st} user agent 101 can receive the reply MM from the MMS relay/server 210 through the retrieve message (M-Retrieve.conf) (S311).

The 1^{st} user agent 101 transmits the receive acknowledgement message (M-Acknowlege.ind) to the MMS relay/server 210 (S313). The MMS relay/server 210 transmits a delivery completion message (M-Delivery.ind) to the 2^{nd} user agent 102 to notify that the reply MM has been successfully delivered (S315).

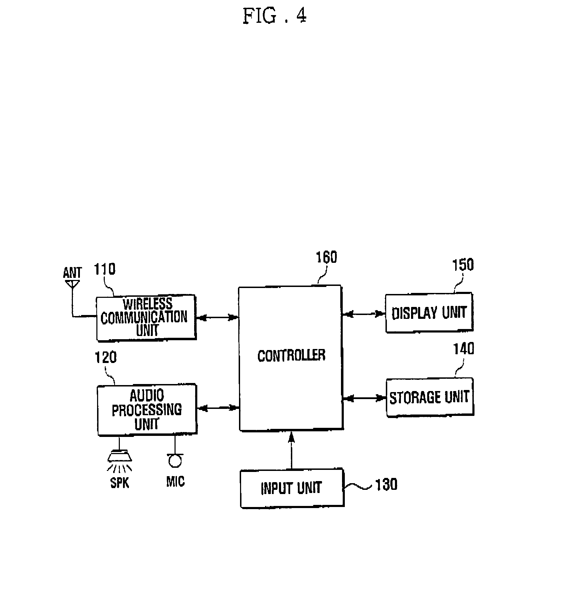

With reference to FIG. 4, the following is a description of an exemplary apparatus to which the above-described method according to the present invention is applied.

FIG. 4 is a schematic block diagram illustrating a user agent according to an exemplary embodiment of the present invention.

As shown in FIG. 4, the user agent is configured to include a wireless communication unit 110, an audio processing unit 120, an input unit 130, a storage unit 140, a display unit 150, and a controller 160.

The wireless communication unit 110 serves to transmit/receive user data wirelessly, such data being multimedia messages, etc. The wireless communication unit 110 converts a modulated signal from the controller 160 into a signal of an intermediate frequency (IF) and then converts the IF signal to a radio frequency signal to transmit it to the mobile network though an antenna ANT. Also, the wireless communication unit 110 converts a radio frequency signal received through the antenna ANT into an IF signal and then into a base band signal, in order, to output it to the controller 160.

The audio processing unit 120 plays back the audio signal output from the controller 160 or outputs audio signals, such as a voice signal, input through a microphone MIC to the controller 160.

The input unit 130 input number or letter information. The input unit 130 is configured to include a plurality of input keys and function keys to set a variety of functions. The input unit 130 outputs key signals, related to a user's setting and function controls of a portable terminal, to the controller 160.

The storage unit 140 stores application programs for performing functions according to an exemplary embodiment of the present invention, downloaded contents, and user data generated by a user.

The storage unit 140 may be configured to include a program area and a data area. The program area stores an operating system (OS) for booting the portable terminal and other application programs that are necessary for other option functions of the portable terminal. The data area stores user data generated as the portable terminal is used. The data area may store received MM and free of charge reply information, etc. Also, the storage unit 140 includes at least one or more buffers that temporarily store data generated while a certain application program is being executed.

The display unit 150 displays video data output from the controller 160, menus of the portable terminal, user data input by a user, function setting information, and a variety of information. The display 150 is typically implemented by a liquid crystal display (LCD). If the display is implemented by a touch screen, it may perform a part or all of the functions of the input unit 130.

Still referring to FIG. 4, the controller 160 controls the entire operation of the portable terminal and signal flows between the blocks in the portable terminal. That is, the controller 160 controls the signal flows between the wireless communication 110, audio processing unit 120, input unit 130, storage unit 140, and display unit 150. The controller 160 performs respective functions of the portable terminal according to input signals (for example, key input signals and touch events generated as a touch screen is touched) input through the input unit 130. When the controller 160 receives free of charge reply information, it processes the information and displays it on the display unit 150.

Although not illustrated in the drawings do not illustrate this, the user agent, according to an exemplary embodiment of the present invention, may be configured to further include selective units having add-on functions as follows: a camera module; a broadcast signal receiving module; a recharging terminal; a digital music source playback module such as an MP3 module; a storage medium inserting unit that receives mobile storage media for storing data; and connecting terminals for exchanging data with external digital devices.

With the spread of digital convergence, although the portable terminals developed thus far are too various to list all their modifications in this description, it will be easily appreciated to those skilled in the art that the other units equivalent to the above-listed units may be further included to the user agent according to the present invention.

The following is a description of a method for notifying free of charge reply information, using the user agent described above, referring to the drawings.

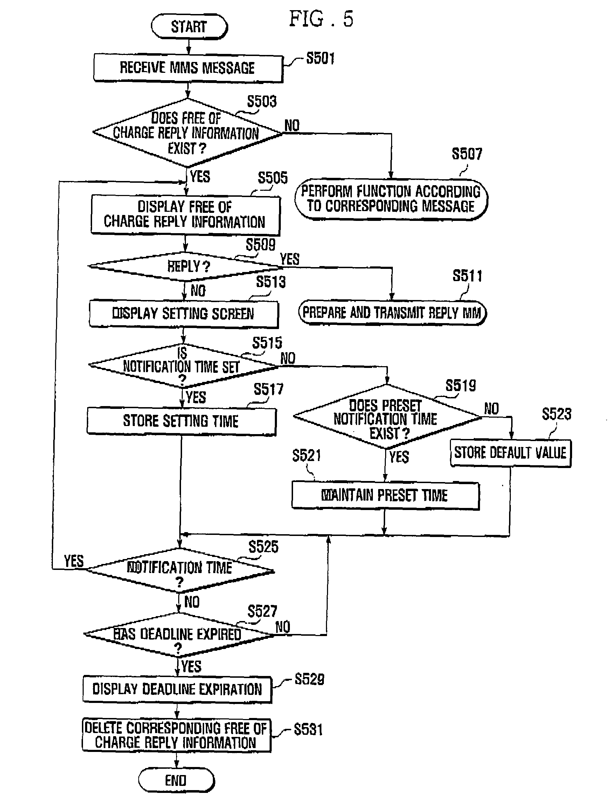

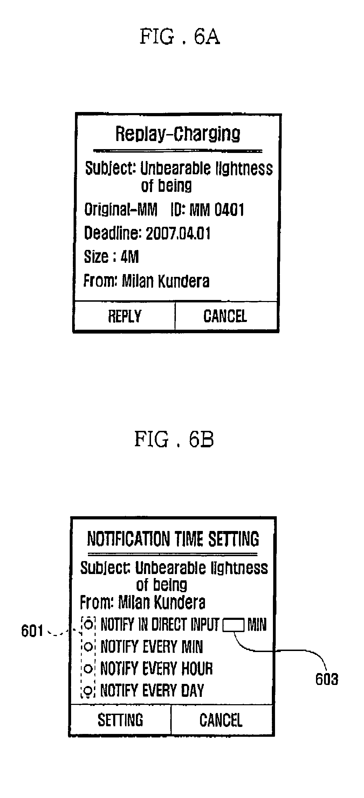

FIG. 5 is a flow chart describing a method for providing free of charge reply information in a user agent according to an exemplary embodiment of the present invention. FIG. 6A and FIG. 6B are screens describing a method for providing free of charge reply information in a user agent according to an exemplary embodiment of the present invention.

Referring now to FIG. 5, the controller 160 receives an MMS message through the wireless communication unit 110 (S501). It is assumed that the MMS message is a notification message (M-Notification.ind) or a retrieve message (M-Retrieve.conf).

The controller 160 determines whether the received MMS message includes free of charge reply information (S503). For example, a determination is made as to whether a free of charge reply setting field (X-Mms-Reply-Charging) exists in the header of the MMS message.

If the MMS message does not include the free of charge reply information at step S503, the controller 160 performs a function of a corresponding message (S507).

However, if the MMS message includes the free of charge reply information at step S503, the controller 160 displays free of charge reply information through the display unit 150 (S505). The free of charge reply information may include, for example, information such as that described in Table 1. The controller 160 extracts free of charge reply information and information about the original MM corresponding to the free of charge reply information from the header of a corresponding MMS message (M-Notification.ind or M-Retrieve.conf), and displays the extracted information through the display unit 150.

An example of displaying the free of charge reply information is shown in FIG. 6A. Using the free of charge reply information, an identifier of a corresponding MM (Original-MM ID), a deadline for free of charge reply, and a size of a reply MM (Reply-MM) available for free of charge reply can be displayed. In addition, the information about a sender (from) of the original MM (Original-MM) can be further displayed.

Through the free of charge reply information, a user can recognize that a reply MM (Reply-MM) to the received message can be transmitted for free. Also, the user can be made aware of the deadline of the free of charge reply and the size of the reply MM transmitted for free. Therefore, the present invention reminds the user of the free of charge reply, an may include the free of charge deadline, and/or the size of the free of charge reply MM, so that the user can benefit from the free of charge advantages and reply to eh received MM without incurring additional costs.

After reading the free of charge reply information, the user can transmit a reply MM immediately or later. The controller 160 determines whether a reply MM is transmitted (5509).

If the reply MM has been transmitted at step S509, the controller 160 prepares the reply MM and transmits it (S511). On the contrary, if the reply MM has not been transmitted at step S509, the controller 160 displays a setting screen (S513).

Specifically, if the user did not transmit a reply MM immediately, the free of charge reply information is displayed again, at intervals extending over a certain period or after a certain time has expired. The purpose is to remind the user that he/she can transmit the reply MM for free. To this end, the setting screen allows the user to set a remind time for when the free of charge reply information will be displayed, regularly or periodically. An example of the setting screen is shown in FIG. 6B.

As shown in FIG. 6B, the remind time can be set as one of the radio buttons 601 is selected. If the first radio button is selected, the screen allows the user to directly input the remind time to an interactive box 603. However, if the remind time already exists in the interactive box, a new remind time may not be input.

The controller 160 determines whether the remind time is set (S515). If the remind time has been set at step S515, the controller 160 maps the set remind time with free of charge reply information corresponding to a corresponding MM and stores it (S517). The storing type of the remind time will be described referring to following Table 2.

**[Table 2]**

| | Field | Description |
|---|---|---|
| 1 | Reminder ID | Free of charge information notification Identifier |
| 2 | Reminder time | Free of charge information remind time |
| 3 | Original-MM ID | Identifier of Original-MM |
| 4 | Subject | Subject of Original-MM |
| 5 | From | Sender of Original-MM |
| 6 | X-Mms-Reply-Charging | Notify that Original-MM can be transmitted for free |
| 7 | X-Mms-Reply-Charging-Deadline | Deadline of free of charge reply |
| 8 | X-Mms-Reply-Charging-Size | Size of free of charge reply MM |
| 9 | X-Mms-Reply-Charging-ID | Identifier of free of charge Original-MM |

When the user inputs the remind time through the setting screen of FIG. 6B as described in FIG. 2, the controller 160 maps the remind time with corresponding free of charge reply information, thereby preparing the Table 2. Here, the table can be prepared in a database or a file and stored in the storage unit 140. Hereinafter, Table 2 is referred to as a "notification table."

However, if the remind time has not been set at step S515, the controller 160 determines whether a previously set remind time of the free of charge reply information corresponding to a corresponding MM exists (S519). The determination is performed in such a way to search for a previously stored notification table and to determine whether a remind time corresponding to a corresponding MM identifier (original-MM ID) exists.

If, at step (S19) the previously set remind time is determined to exist, the controller 160 maintains this existing remind time (S521). For example, if a notification table corresponding to a corresponding MM has existed, the controller 160 maintains the value of a remind time field in the existing notification table.

However, if at step S519 the previously set remind time is determined not to exist, the controller 160 stores a default value for a remind time (S523). Specifically, if a new remind time is not set and no previously set remind time exists, a notification table corresponding to a corresponding MM is newly prepared and the new remind time is set to a default value. In particular, the controller 160 can allocate a reminder ID at steps S517, S521, and S523, when the remind time is stored.

When the remind time is set through steps S515 to S523, the controller 160 detects whether or not the remind time has arrived (S525).

If the remind time has arrived at step S525, the controller 160 next proceeds to step S505 to display the free of charge reply information based on the notification table. Here, the free of charge reply information is displayed through the display unit 150, as shown in FIG. 6A.

On the contrary, if the remind time has not arrived at step S625, the controller 160 detects whether the deadline of free of charge reply has expired (S527). If the deadline has expired at step S527, the controller 160 displays that the deadline of free of charge reply has expired through the display unit 150 (S529). The controller 160 then deletes corresponding free of charge reply information and remind time (S531). For example, the controller 160 deletes a corresponding notification table in which the free of charge reply information and remind time are stored.

As described above, when receiving free of charge reply information, the apparatus of the present invention can remind the user of the free of charge reply information periodically, so that the users can benefit from the advantages according thereto before they expire.

Although exemplary embodiments of the present invention have been described in detail hereinabove, it should be understood that many variations and modifications of the basic inventive concept herein described, which may appear to those skilled in the art, will still fall within the sprit of the present invention and the scope of the appended claims.

For example, the portable terminal may display the free of charge information prior to viewing the MMS message, subsequent to viewing the MMS message, or displayed concurrently with viewing the MMS message. The free of charge information may be provided in a notifying step that includes an audio or audio-visual notification.

Furthermore, the portable terminal may also notify the user about the free of charge information by, for example, highlighting the message or displaying the message in a first color to indicate there is free of charge reply information associated with the MMS message, and displaying the MMS message in a second color after the free of charge reply information has been one of displayed or acknowledged. Also, the MMS message may be displayed in a second color after a reply has been sent using the free of charge information. In addition to color, any type of distinguishment can also be used, such as boldface, italics, different font, different font size, blinking display, sound, etc.

## Claims

**1.** A method for providing information for a multimedia messaging service (MMS) in a portable terminal, comprising:
(a) determining whether an MMS message includes free of charge reply information; and
when it has been determined in step (a) that the MMS message includes free of charge information, notifying a user that free of charge reply information has accompanied the MMS message.

**2.** The method of claim 1, wherein the portable terminal displays the free of charge information subsequent to receipt of the MMS message.

**3.** The method of claim 2, wherein the free of charge information is displayed prior to viewing the MMS message.

**4.** The method of claim 2, wherein the free of charge information is subsequent to viewing the MMS message.

**5.** The method of claim 2, wherein the free of charge information is displayed concurrently with viewing the MMS message.

**6.** The method of claim 1, wherein the notifying step includes an audio or audio-visual notification.

**7.** The method of claim 1, wherein the notifying step includes one of highlighting the message or displaying the message in a first color to indicate there is free of charge reply information associated with the MMS message.

**8.** The method of claim 7, wherein the message is displayed in a second color after the free of charge reply information has been one of displayed or acknowledged.

**9.** The method of claim 7, wherein the message is displayed in a second color after a reply has been sent using the free of charge information.

**10.** The method of claim 1, wherein displaying the free of charge reply information comprises:
mapping the free of charge reply information with a remind time corresponding to the free of charge reply information, and storing the mapped result; and
displaying the free of charge reply information at the remind time.

**11.** The method of claim 10, wherein the MMS message is an M-Notification.ind message or an M-retrieve.conf message.

**12.** The method of claim 10, wherein the free of charge reply information comprises one or more from among a free of charge replay setting field, a free of charge reply deadline field, a free of charge reply size field, and a free of charge identifier field.

**13.** The method of claim 10, wherein the remind time is a user's defined setting time or a default value.

**14.** The method of claim 1, further comprising:
transmitting a reply multimedia message corresponding to the free of charge reply information; and
deleting the free of charge reply information.

**15.** An apparatus for providing information for a multimedia messaging service (MMS) in a portable terminal, comprising:
a display unit for displaying free of charge reply information included in a received MMS message; and
a controller for extracting the free of charge information from the received MMS message and for controlling the display unit to display the free of charge reply information.

**16.** The apparatus of claim 15, further comprising:
a storage unit for storing the free of charge reply information and a remind time corresponding to the free of charge reply information.

**17.** The apparatus of claim 16, wherein the controller controls the display unit to display the free of charge reply information at the remind time.

**18.** The apparatus of claim 17, wherein the free of charge reply information comprises one or more from among a free of charge replay setting field, a free of charge reply deadline field, a free of charge reply size field, and a free of charge identifier field.

**21.** The apparatus of claim 17, wherein the remind time is a user's setting time or a default value.

**22.** The apparatus of claim 15, wherein the MMS message is an M-Notification.ind message or an M-retrieve.conf message.

**23.** The apparatus of claim 15, wherein the controller includes controlling means for controlling transmission of a reply multimedia message corresponding to the free of charge reply information and for deleting the free of charge reply information.
